(19)

Europäisches Patentamt

European Patent Office

Office européen des brevets

(11) **EP 4 734 558 A1**

(12) **EUROPEAN PATENT APPLICATION**
published in accordance with Art. 153(4) EPC

(43) Date of publication:
**29.04.2026  Bulletin 2026/18**

(21) Application number: **24861784.7**

(22) Date of filing: **13.08.2024**

(51) International Patent Classification (IPC):
**H04W 4/02** (2018.01)

(52) Cooperative Patent Classification (CPC):
**G08C 17/02; G06F 3/0346; H04W 4/026;
H04W 4/80**

(86) International application number:
**PCT/CN2024/111660**

(87) International publication number:
**WO 2025/050940 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023  CN 202311163707**

(71) Applicant: **Huawei Technologies Co., Ltd.
Shenzhen, Guangdong 518129 (CN)**

(72) Inventors:
• **XU, Haowei
  Shenzhen, Guangdong 518129 (CN)**
• **HU, Zhengyuan
  Shenzhen, Guangdong 518129 (CN)**
• **DONG, Wei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POINTING DETERMINATION METHOD AND RELATED DEVICE**

(57)    Embodiments of this application provide a method for determining a pointing direction and a related device, and relate to the communication field. In the method, a first posture parameter of a remote control device is obtained, where the first posture parameter indicates a first posture change trend of the remote control device relative to a controlled device in a first time period; a second posture parameter of the remote control device is obtained, where the second posture parameter indicates a second posture change trend of the remote control device in the first time period relative to a first moment, and the first moment is earlier than the first time period; and when the first posture change trend is the same as or similar to the second posture change trend, it is determined that the remote control device is pointing to the controlled device. In this solution, whether the remote control device is pointing to the controlled device is determined based on the first posture parameter and the second posture parameter of the remote control device. When it is determined that the first posture change trend is the same as or similar to the second posture change trend, it may be determined that the remote control device is pointing to the controlled device.

FIG. 3

**Description**

This application claims priority to Chinese Patent Application No. 202311163707.X, filed with the China National Intellectual Property Administration on September 8, 2023 and entitled "METHOD FOR DETERMINING POINTING DIRECTION AND RELATED DEVICE", which is incorporated herein by reference in its entirety.

**TECHNICAL FIELD**

Embodiments of this application relate to the communication field, and in particular, to a method for determining a pointing direction and a related device.

**BACKGROUND**

An ultra-wideband (ultra-wideband, UWB) technology, as a wireless carrier communication technology, uses nanosecond-level non-sinusoidal narrow pulses instead of sinusoidal carriers to perform data transmission, and therefore occupies a very wide spectrum range. The UWB technology has merits such as low system complexity, low power spectrum density of transmit signals, insensitivity to channel fading, poor interception capability, and high positioning accuracy. It is especially applicable to high-speed wireless access in densely-populated multi-path places such as indoor areas.

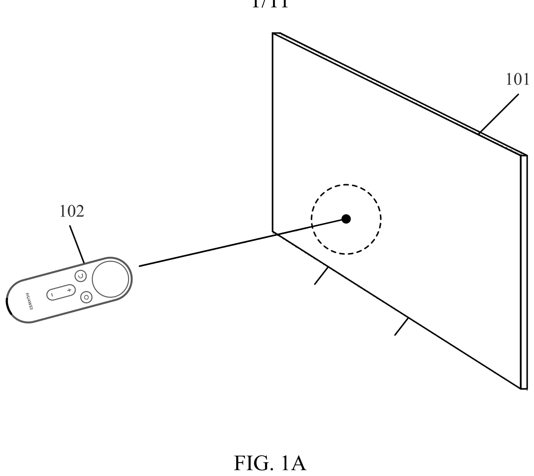

Refer to FIG. 1A. FIG. 1A is a diagram of a display system according to an embodiment of this application. The display system includes a display screen 101 and a remote control 102. The display screen 101 is provided with a UWB antenna assembly (not shown), and the remote control 102 is provided with a UWB antenna (not shown). The remote control 102 performs signal interaction with the UWB antenna assembly of the display screen 101 through the UWB antenna, and can obtain, through computing, a posture and a position of the remote control 102 relative to the display screen 101, to compute a specific position of the display screen to which the remote control 102 is currently pointing and display a cursor at the corresponding position. However, in some cases, whether the remote control 102 is directly facing and pointing to the display screen 101 or is facing away from and pointing to the display screen 101 cannot be distinguished. As a result, the cursor is displayed both when the remote control 102 is directly facing and pointing to the display screen 101 and when the remote control 102 is facing away from and pointing to the display screen 101.

SUMMARY

This application provides a method for determining a pointing direction and a related device, to determine whether a remote control device is pointing to a controlled device.

According to a first aspect, a method for determining a pointing direction is provided. The method may be performed by a device for determining a pointing direction, or may be performed by a chip in the device for determining a pointing direction. The device for determining a pointing direction may be a device such as a remote control device or a controlled device, and is not limited herein. The remote control device is configured to control the controlled device.

The method for determining a pointing direction includes: obtaining a first posture parameter of the remote control device, where the first posture parameter indicates a first posture change trend of the remote control device relative to the controlled device in a first time period; obtaining a second posture parameter of the remote control device, where the second posture parameter indicates a second posture change trend of the remote control device in the first time period relative to a first moment, and the first moment is earlier than the first time period; and when the first posture change trend is the same as or similar to the second posture change trend, determining that the remote control device is pointing to the controlled device.

The first posture parameter may be understood as indicating an absolute posture change trend of the remote control device, and the second posture parameter may be understood as indicating a relative posture change trend of the remote control device.

It can be learned that, in this solution, whether the remote control device is pointing to the controlled device is determined by using the first posture parameter and the second posture parameter of the remote control device. When it is determined that the first posture change trend is the same as or similar to the second posture change trend, it may be determined that the remote control device is pointing to the controlled device. The pointing means that a head of the remote control device is facing the controlled device, that is, the remote control device is directly facing and pointing to the controlled device.

In a possible implementation of the first aspect, after it is determined that the remote control device is pointing to the controlled device, the method for determining a pointing direction further includes: controlling, based on a third posture parameter of the remote control device, the controlled device to perform a first operation, where the third posture parameter indicates a posture of the remote control device relative to the controlled device at a current moment. The third posture parameter may be understood as indicating an absolute posture of the remote control device at the current moment.

The first operation may be any operation, for example, controlling the controlled device to display a cursor corresponding to the remote control device, controlling the controlled device to mute, controlling the controlled device to play music, controlling the controlled device to power on or power off, or controlling the controlled device to display a dragged interface. A position where the cursor is displayed is a projected position that is of the remote control device in the controlled device and that is determined based on the third posture parameter.

In a possible implementation of the first aspect, a parameter representing similarity between the first posture change trend and the second posture change trend includes at least one of the following: a first parameter representing a magnitude of correlation between the first posture parameter and the second posture parameter; a second parameter representing a magnitude of fluctuation of a difference between the first posture parameter and the second posture parameter; and a maximum value $V_2$ of the difference between the first posture parameter and the second posture parameter.

The first parameter may be at least one of the following: a convolution, a linear correlation coefficient, a chi-square test value, or a sum R of products of the first posture parameter and the second posture parameter. The second parameter may be at least one of the following: a variance $V_1$ or a standard deviation between the first posture parameter and the second posture parameter.

For example, a manner of computing the sum R of products is: $R = \Sigma(dI(i) * dU(i))$, where $dI(i) = I(i)-I(1)$, $i \in (2, n)$, $dU(i) = U(i)-U(1)$, and $i \in (2, n)$. It is assumed that the posture parameters of the remote control device are collected at a collection frequency p, and one frame of data may be obtained each time of collection. Therefore, 2n frames of data may be obtained, and are the first posture parameter U(n) and the second posture parameter $I$(n) separately, where n is greater than or equal to 2, and a specific value of n may be set based on an actual situation.

For example, a manner of computing the variance $V_1$ is: $V_1 = var(dI(i)-dU(i))$, where $i \in (2, n)$ and $var$ represents the variance.

For example, a manner of computing the maximum difference value $V_2$ is: $V_2 = max(dI(i)-dU(i))$, where $i \in (2, n)$ and $max$ represents getting the maximum value.

In a possible implementation of the first aspect, the first posture parameter includes at least one of the following: a quaternion, an azimuth, or a pitch angle, and the second posture parameter includes a parameter of a same type as the first posture parameter. The quaternion is a combination of one real number and three complex numbers, and represents a posture of the device.

In a possible implementation of the first aspect, obtaining the first posture parameter of the remote control device specifically includes: obtaining a first direction-finding signal received by a direction-finding unit of the remote control device in the first time period, where the direction-finding unit includes at least one of the following: a NearLink direction-finding unit, an ultra-wideband direction-finding unit, a Bluetooth direction-finding unit, a Wireless Fidelity Wi-Fi direction-finding unit, a millimeter-wave radar direction-finding unit, or an ultrasonic direction-finding unit, and the first direction-finding signal is transmitted by a direction-finding base station; and determining the first posture parameter based on the first direction-finding signal.

In this solution, the first posture parameter may be determined based on the first direction-finding signal received by the direction-finding unit of the remote control device in the first time period.

In a possible implementation of the first aspect, obtaining the first posture parameter of the remote control device specifically includes: receiving the first posture parameter sent by the controlled device.

In this solution, alternatively, the first posture parameter of the remote control device may be directly obtained through the controlled device, where the controlled device obtains the first posture parameter based on the first direction-finding signal.

In a possible implementation of the first aspect, obtaining the second posture parameter of the remote control device specifically includes: obtaining the second posture parameter through an inertia direction-finding unit of the remote control device.

According to a second aspect, this application provides a device for determining a pointing direction. The device for determining a pointing direction includes an obtaining module and a determining module.

The obtaining module is configured to obtain a first posture parameter of a remote control device. The first posture parameter indicates a first posture change trend of the remote control device relative to a controlled device in a first time period.

The obtaining module is further configured to obtain a second posture parameter of the remote control device. The second posture parameter indicates a second posture change trend of the remote control device in the first time period relative to a first moment. The first moment is earlier than the first time period.

The determining module is configured to: when the first posture change trend is the same as or similar to the second posture change trend, determine that the remote control device is pointing to the controlled device.

In this solution, the device for determining a pointing direction determines, by using the first posture parameter and the second posture parameter of the remote control device, whether the remote control device is pointing to the controlled device. When it is determined that the first posture change trend is the same as or similar to the second posture change trend, it may be determined that the remote control device is pointing to the controlled device.

In a possible implementation of the second aspect, the device for determining a pointing direction further includes a control module.

The control module is configured to: after it is determined that the remote control device is pointing to the controlled device, control, based on a third posture parameter of the remote control device, the controlled device to perform a first operation, where the third posture parameter indicates a posture of the remote control device relative to the controlled device at a current moment.

In a possible implementation of the second aspect, a parameter representing similarity between the first posture change trend and the second posture change trend includes at least one of the following: a first parameter representing a magnitude of correlation between the first posture parameter and the second posture parameter; a second parameter representing a magnitude of fluctuation of a difference between the first posture parameter and the second posture parameter; and a maximum value of the difference between the first posture parameter and the second posture parameter.

In a possible implementation of the second aspect, the first posture parameter includes at least one of the following: a quaternion, an azimuth, or a pitch angle, and the second posture parameter includes a parameter of a same type as the first posture parameter.

In a possible implementation of the second aspect, in terms of obtaining the first posture parameter of the remote control device, the obtaining module is specifically configured to: obtain a first direction-finding signal received by a direction-finding unit of the remote control device in the first time period, where the direction-finding unit includes at least one of the following: a NearLink direction-finding unit, an ultra-wideband direction-finding unit, a Bluetooth direction-finding unit, a Wireless Fidelity Wi-Fi direction-finding unit, a millimeter-wave radar direction-finding unit, or an ultrasonic direction-finding unit, and the first direction-finding signal is transmitted by a direction-finding base station; and determine the first posture parameter based on the first direction-finding signal.

In a possible implementation of the second aspect, in terms of obtaining the first posture parameter of the remote control device, the obtaining module is specifically configured to: receive the first posture parameter sent by the controlled device.

In a possible implementation of the second aspect, in terms of obtaining the second posture parameter of the remote control device, the obtaining module is specifically configured to: obtain the second posture parameter through an inertia direction-finding unit of the remote control device.

According to a third aspect, this application further provides a device for determining a pointing direction, including a processor and a memory. The processor is connected to the memory, the memory is configured to store program code, and the processor is configured to invoke the program code to perform the method for determining a pointing direction according to the first aspect.

According to a fourth aspect, this application further provides a computer-readable storage medium. The computer-readable storage medium stores a computer program, and the computer program is executed by a processor to implement the method for determining a pointing direction according to the first aspect.

According to a fifth aspect, this application further provides a computer program product including instructions. When the computer program product is run on a computer, the computer is enabled to perform the method for determining a pointing direction according to the first aspect.

According to a sixth aspect, this application further provides a chip. The chip includes a processor and a data interface, and the processor reads, through the data interface, instructions stored in a memory, to perform the method for determining a pointing direction according to the first aspect.

Optionally, in an implementation, the chip may further include a memory, the memory stores instructions, the processor is configured to execute the instructions stored in the memory, and when the instructions are executed, the processor is configured to perform the method for determining a pointing direction according to the first aspect.

## BRIEF DESCRIPTION OF DRAWINGS

The following describes accompanying drawings used in embodiments of this application.

FIG. 1A is a diagram of a display system according to an embodiment of this application;
FIG. 1B is a diagram of a remote control according to an embodiment of this application;
FIG. 2 is a diagram of a communication system according to an embodiment of this application;
FIG. 3 is a flowchart of a method for determining a pointing direction according to an embodiment of this application;
FIG. 4A is a diagram of a first posture parameter and a second posture parameter according to an embodiment of this application;
FIG. 4B is a diagram of another first posture parameter and another second posture parameter according to an embodiment of this application;

FIG. 4C is a diagram of cursor display according to an embodiment of this application;

FIG. 4D is a diagram of a remote control device according to an embodiment of this application;

FIG. 4E is a diagram of a coordinate system of a direction-finding base station according to an embodiment of this application;

FIG. 4F is a diagram of a coordinate system of a remote control device according to an embodiment of this application;

FIG. 4G is a diagram of a direction-finding unit according to an embodiment of this application;

FIG. 4H is a diagram of another direction-finding unit according to an embodiment of this application;

FIG. 4I is a diagram of still another direction-finding unit according to an embodiment of this application;

FIG. 4J is a diagram of yet another direction-finding unit according to an embodiment of this application;

FIG. 4K is a waveform diagram of an azimuth according to an embodiment of this application;

FIG. 4L is a diagram of determining a device to be controlled according to an embodiment of this application;

FIG. 5 is a diagram of a structure of a device for determining a pointing direction according to an embodiment of this application; and

FIG. 6 is a diagram of a structure of another device for determining a pointing direction according to an embodiment of this application.

## DESCRIPTION OF EMBODIMENTS

The following describes technical solutions in this application with reference to the accompanying drawings.

In embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of' means two or more. "At least one of the following items (pieces)" or a similar expression thereof means any combination of these items, including a singular item (piece) or any combination of plural items (pieces). For example, at least one of a, b, or c may indicate: a, b, c, (a and b), (a and c), (b and c), or (a, b, and c), where a, b, and c may be singular or plural. The term "and/or" describes an association between associated objects, and represents that three relationships may exist. For example, A and/or B may represent the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first device and a second device are merely for ease of description, and do not indicate a difference between the first device and the second device in terms of a structure, a degree of importance, or the like. In some embodiments, the first device and the second device may alternatively be a same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

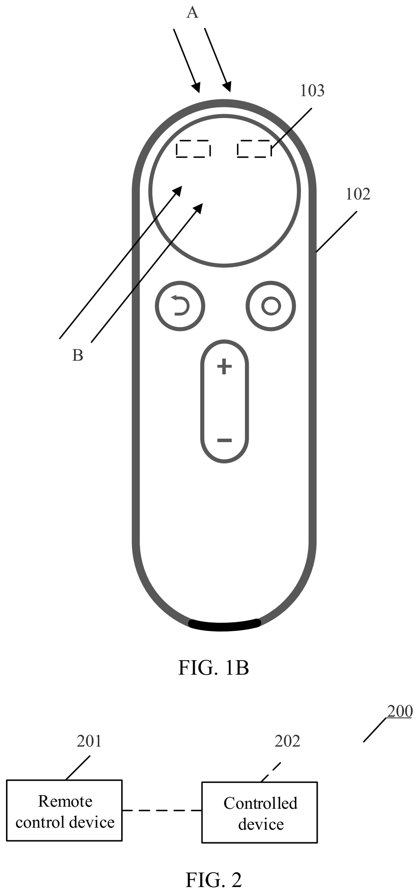

Refer to a display system shown in FIG. 1A. In some cases, whether a remote control 102 is directly facing and pointing to a display screen 101 or is facing away from and pointing to the display screen 101 cannot be distinguished. As a result, a cursor is displayed both when the remote control 102 is directly facing and pointing to the display screen 101 and when the remote control 102 is facing away from and pointing to the display screen 101. For example, refer to FIG. 1B. FIG. 1B is a diagram of a remote control according to an embodiment of this application. A UWB antenna 103 of the remote control 102 does not have a longitudinal degree of freedom, that is, two UWB antennas are disposed horizontally. As a result, the remote control 102 cannot distinguish whether a UWB signal is from the front or the back. Therefore, when the remote control 102 is directly facing and pointing to a display screen 101, the remote control 102 may receive a UWB signal A that is incident from the front and display a cursor. However, when the remote control 102 is facing away from and pointing to the display screen 101, the remote control 102 may further receive a UWB signal B that is incident from the back and display a cursor, resulting in incorrect display of the cursor.

Therefore, embodiments of this application provide a method for determining a pointing direction, to determine whether a remote control device is pointing to a controlled device. The pointing means that a head of the remote control device is facing the controlled device, that is, the remote control device is directly facing and pointing to the controlled device. According to the method for determining a pointing direction in this embodiment of this application, whether the remote control device is directly facing and pointing to the controlled device or is facing way from and pointing to the controlled device can be distinguished.

Refer to FIG. 2. FIG. 2 is a diagram of a communication system according to an embodiment of this application. The method for determining a pointing direction in embodiments of this application may be applied to the communication system 200. The communication system 200 includes a remote control device 201 and a controlled device 202. The remote control device 201 is configured to control the controlled device 202. The remote control device 201 and the controlled device 202 may perform wireless transmission. For example, the wireless transmission includes Bluetooth (Bluetooth), infrared, mobile network, wireless local area network (wireless local area network, WLAN), NearLink (NearLink), ultra-wideband UWB, Wireless Fidelity (Wireless Fidelity, Wi-Fi), millimeter-wave radar, or ultrasonic transmission.

For example, the remote control device 201 includes a device having a remote control function, such as a remote control, a vehicle key, a mobile phone, or a watch.

For example, the controlled device 202 includes a device such as a vehicle, a computer, an unmanned aerial vehicle, a television, a display screen, a projector, a sound box, a robot vacuum cleaner, a home appliance such as a lamp or an air conditioner, or a remotely controlled toy.

The method for determining a pointing direction in embodiments of this application may be performed by a device for determining a pointing direction, or may be performed by a chip in the device for determining a pointing direction. The device for determining a pointing direction may be a device such as a remote control device or a controlled device, and is not limited herein. The following description is made by using an example in which the device for determining a pointing direction performs the method for determining a pointing direction in embodiments of this application.

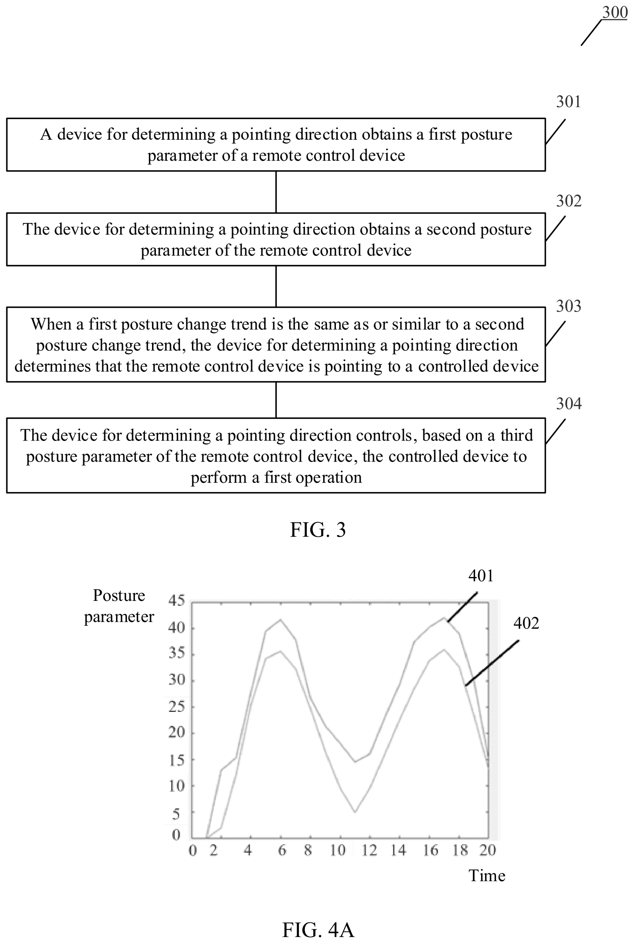

Refer to FIG. 3. FIG. 3 is a flowchart of a method for determining a pointing direction according to an embodiment of this application. The method 300 for determining a pointing direction includes the following steps.

301: A device for determining a pointing direction obtains a first posture parameter of a remote control device.

Specifically, the first posture parameter indicates a first posture change trend of the remote control device relative to a controlled device in a first time period. The first posture parameter may be understood as indicating an absolute posture change trend of the remote control device. Further, the first posture parameter includes a plurality of absolute posture parameters in the first time period.

302: The device for determining a pointing direction obtains a second posture parameter of the remote control device.

Specifically, the second posture parameter indicates a second posture change trend of the remote control device in the first time period relative to a first moment. The second posture parameter may be understood as indicating a relative posture change trend of the remote control device. Further, the second posture parameter includes a plurality of relative postures in the first time period.

The first moment is earlier than the first time period. For example, the first moment may be a moment at which the remote control device is initialized or another moment earlier than the first time period.

303: When the first posture change trend is the same as or similar to the second posture change trend, the device for determining a pointing direction determines that the remote control device is pointing to the controlled device.

In the method for determining a pointing direction in this embodiment of this application, whether the remote control device is pointing to the controlled device is determined by using the first posture parameter and the second posture parameter of the remote control device. When it is determined that the first posture change trend is the same as or similar to the second posture change trend, it may be determined that the remote control device is pointing to the controlled device. In other words, the device for determining a pointing direction can distinguish between pointing directions of the remote control device, where the pointing directions include directly facing and pointing to the controlled device and facing away from and pointing to the controlled device.

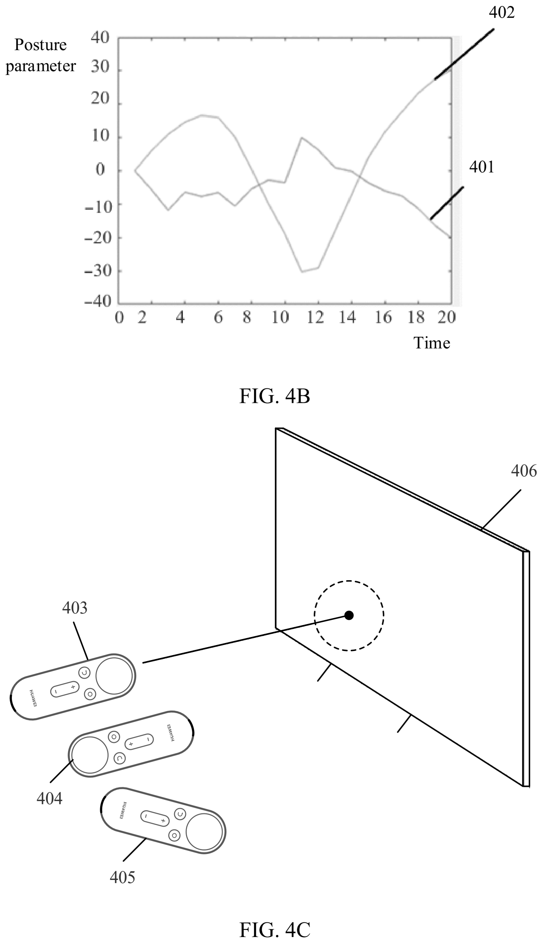

For example, that the first posture change trend is the same as the second posture change trend may be understood as that similarity between the posture change trend indicated by the first posture parameter and the posture change trend indicated by the second posture parameter reaches 100% in the first time period. That the first posture change trend is similar to the second posture change trend may be understood as that the similarity between the posture change trend indicated by the first posture parameter and the posture change trend indicated by the second posture parameter exceeds a first threshold in the first time period, where a specific value of the first threshold may be set based on an actual situation and is not specifically limited. For example, refer to FIG. 4A. FIG. 4A is a diagram of a first posture parameter and a second posture parameter according to an embodiment of this application. The first posture parameter and the second posture parameter are separately represented as line charts, where a curve 401 corresponding to the first posture parameter and a curve 402 corresponding to the second posture parameter may be obtained. It can be learned that, in FIG. 4A, a change trend of the curve 401 is similar to a change trend of the curve 402. In addition, refer to FIG. 4B. FIG. 4B is a diagram of another first posture parameter and another second posture parameter according to an embodiment of this application. Change trends of a curve 401 and a curve 402 in FIG. 4B are different and not similar to each other.

In a possible implementation, as shown in FIG. 3, after the device for determining a pointing direction determines that the remote control device is pointing to the controlled device, the method 300 for determining a pointing direction further includes the following step.

304: The device for determining a pointing direction controls, based on a third posture parameter of the remote control device, the controlled device to perform a first operation.

Specifically, the third posture parameter indicates a posture of the remote control device relative to the controlled device at a current moment. The third posture parameter may be understood as indicating an absolute posture of the remote control device at the current moment.

The first operation may be any operation, for example, controlling the controlled device to display a cursor corresponding to the remote control device, controlling the controlled device to mute, controlling the controlled device to play music, controlling the controlled device to power on or power off, or controlling the controlled device to display a dragged interface.

A position where the cursor is displayed is a projected position that is of the remote control device in the controlled device and that is determined based on the third posture parameter. Specifically, for example, when a direction-finding base station is disposed on the controlled device, the third posture parameter of the remote control device is equivalent to a vector, and the vector is projected to the controlled device (where a size and a resolution of a display screen of the controlled device are known), and the projected position of the remote control device in the controlled device may be determined through projection conversion. For another example, when a direction-finding base station is not disposed on the controlled device, a position of the controlled device needs to be obtained, and the projected position of the remote control device in the controlled device may be determined based on the position and the third posture parameter of the remote control device. To implement an effect that the cursor is displayed only when the remote control device is pointing to the controlled device, refer to FIG. 4C. FIG. 4C is a diagram of cursor display according to an embodiment of this application. A display screen is used as an example of a controlled device 406. When a remote control device is at a first posture 403, the remote control device is directly facing and pointing to the controlled device 406 at this time, and a cursor is displayed on the controlled device 406. When the remote control device is at a second posture 404, the remote control device is facing away from and pointing to the controlled device 406 at this time, and no cursor is displayed on the controlled device 406. When the remote control device is at a third posture 405, the remote control device does not point to the controlled device 406 (where a pointing direction of the remote control device deviates from the controlled device 406) at this time, and no cursor is displayed on the controlled device 406.

For example, when the remote control device is pointing to the controlled device, the remote control device operates in a pointing mode and the cursor is displayed only when the remote control device is pointing to the controlled device. For an effect of the pointing mode, refer to FIG. 4C.

For example, when the remote control device does not point to the controlled device, the remote control device operates in an air mouse mode. In the air mouse mode, the remote control device has no pointing effect, and the cursor is displayed regardless of any pointing direction. Therefore, there is no need to distinguish between a forward pointing direction and a reverse pointing direction.

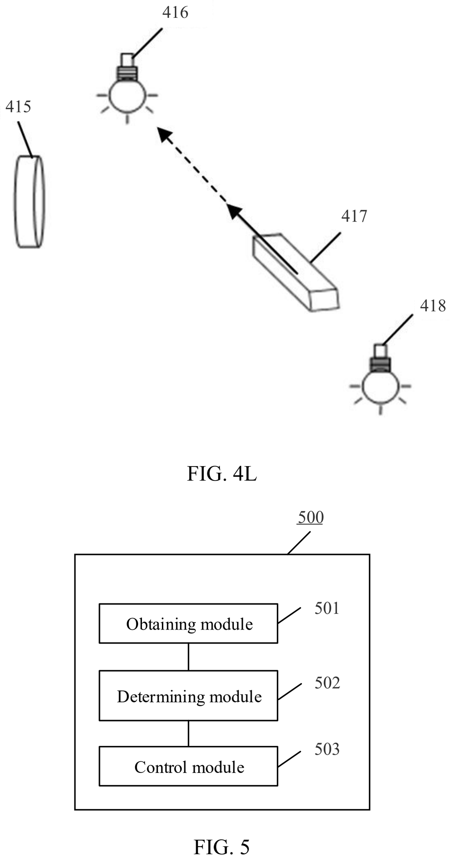

For example, when the third posture parameter satisfies a preset condition, the device for determining a pointing direction controls the controlled device to perform the first operation. The first operation is, for example, controlling the controlled device to mute, controlling the controlled device to play music, controlling the controlled device to power on or power off, or controlling the controlled device to display a dragged interface. For example, the preset condition is that the third posture parameter falls within a first range, and the first range may be set according to an actual situation. For example, when the third posture parameter is an absolute azimuth, the preset condition is that the absolute azimuth falls within an azimuth range. For another example, when the third posture parameter is an absolute azimuth and an absolute pitch angle, the preset condition is that the absolute azimuth falls within an azimuth range and the absolute pitch angle falls within a pitch angle range. For details, refer to related records about FIG. 4L in the following description.

In a possible implementation, the first posture parameter includes at least one of the following: a quaternion, an azimuth, or a pitch angle, and the second posture parameter includes a parameter of a same type as the first posture parameter.

The quaternion is a combination of one real number and three complex numbers, and represents a posture of the device. Specifically, the quaternion is a simple hypercomplex number. The complex number includes a real number and an imaginary unit i, where $i^2 = -1$. Similarly, the quaternion includes a real number and three imaginary units i, j, and k, and a relationship between them is as follows: $i^2 = j^2 = k^2 = -1$, and $i^0 = j^0 = k^0 = 1$. Each quaternion is a linear combination of 1, i, j, and k, in other words, a quaternion may be generally represented as $a + bi + cj + dk$, where a, b, c, and d are real numbers. Geometric meanings of i, j, and k may be understood as rotation, where i rotation represents rotation of a forward direction of a Z axis to a forward direction of a Y axis on a plane on which the Z axis intersects with the Y axis, j rotation represents rotation of a forward direction of an X axis to the forward direction of the Z axis on a plane on which the X axis intersects with the Z axis, k rotation represents rotation of the forward direction of the Y axis to the forward direction of the X axis on a plane on which the Y axis intersects with the X axis, and -i, -j, and -k respectively represent reverse rotation of i, j, and k rotation.

For example, when the first posture parameter is a quaternion, the second posture parameter is a quaternion. In this case, the first posture parameter is an absolute quaternion, and the second posture parameter is a relative quaternion.

For example, when the first posture parameter is an azimuth, the second posture parameter is an azimuth. In this case, the first posture parameter is an absolute azimuth, and the second posture parameter is a relative azimuth.

For example, when the first posture parameter is a pitch angle, the second posture parameter is a pitch angle. In this case, the first posture parameter is an absolute pitch angle, and the second posture parameter is a relative pitch angle.

For example, when the first posture parameter is a quaternion and an azimuth, the second posture parameter is a quaternion and an azimuth. In this case, the first posture parameter is an absolute quaternion and an absolute azimuth, and the second posture parameter is a relative quaternion and a relative azimuth.

For example, when the first posture parameter is a quaternion and a pitch angle, the second posture parameter is a quaternion and a pitch angle. In this case, the first posture parameter is an absolute quaternion and an absolute pitch angle, and the second posture parameter is a relative quaternion and a relative pitch angle.

For example, when the first posture parameter is an azimuth and a pitch angle, the second posture parameter is an azimuth and a pitch angle. In this case, the first posture parameter is an absolute azimuth and an absolute pitch angle, and the second posture parameter is a relative azimuth and a relative pitch angle.

For example, when the first posture parameter is a quaternion, an azimuth, and a pitch angle, the second posture parameter is a quaternion, an azimuth, and a pitch angle. In this case, the first posture parameter is an absolute quaternion, an absolute azimuth, and an absolute pitch angle, and the second posture parameter is a relative quaternion, a relative azimuth, and a relative pitch angle.

For example, the absolute azimuth means a horizontal angle of the remote control device relative to the controlled device, the relative azimuth means a change of the horizontal angle of the remote control device in the first time period relative to the first moment, the absolute pitch angle means a vertical angle of the remote control device relative to the controlled device, and the relative pitch angle means a change of the vertical angle of the remote control device in the first time period relative to the first moment.

In a possible implementation, step 301 specifically includes the following steps.

311: The device for determining a pointing direction obtains a first direction-finding signal received by a direction-finding unit of the remote control device in the first time period.

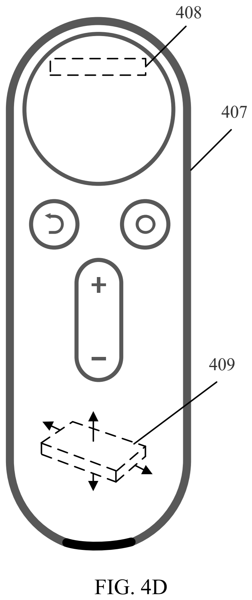

For example, refer to FIG. 4D. FIG. 4D is a diagram of a remote control device according to an embodiment of this application. The remote control device 407 includes a direction-finding unit 408. The direction-finding unit 408 includes at least one of the following: a NearLink direction-finding unit, an ultra-wideband UWB direction-finding unit, a Bluetooth direction-finding unit, a Wireless Fidelity Wi-Fi direction-finding unit, a millimeter-wave radar direction-finding unit, or an ultrasonic direction-finding unit. The first direction-finding signal is transmitted by the controlled device. The remote control device 407 receives, through the direction-finding unit 408, the first direction-finding signal transmitted by the direction-finding base station. Accordingly, when the direction-finding unit 408 is a UWB direction-finding unit, the direction-finding base station is a UWB base station and the first direction-finding signal is a UWB signal; or when the direction-finding unit 408 is a Bluetooth direction-finding unit, the direction-finding base station is a Bluetooth base station and the first direction-finding signal is a Bluetooth signal. The rest may be deduced by analogy.

The direction-finding base station may be disposed on a fixed object such as a wall or a partition plate, or the direction-finding base station may be disposed on another intelligent device, for example, the direction-finding base station is disposed on the controlled device.

312: The device for determining a pointing direction determines the first posture parameter based on the first direction-finding signal.

In this embodiment of this application, the device for determining a pointing direction may determine the first posture parameter based on the first direction-finding signal received by the direction-finding unit 408 in the first time period.

The following describes definitions of the azimuth and the pitch angle.

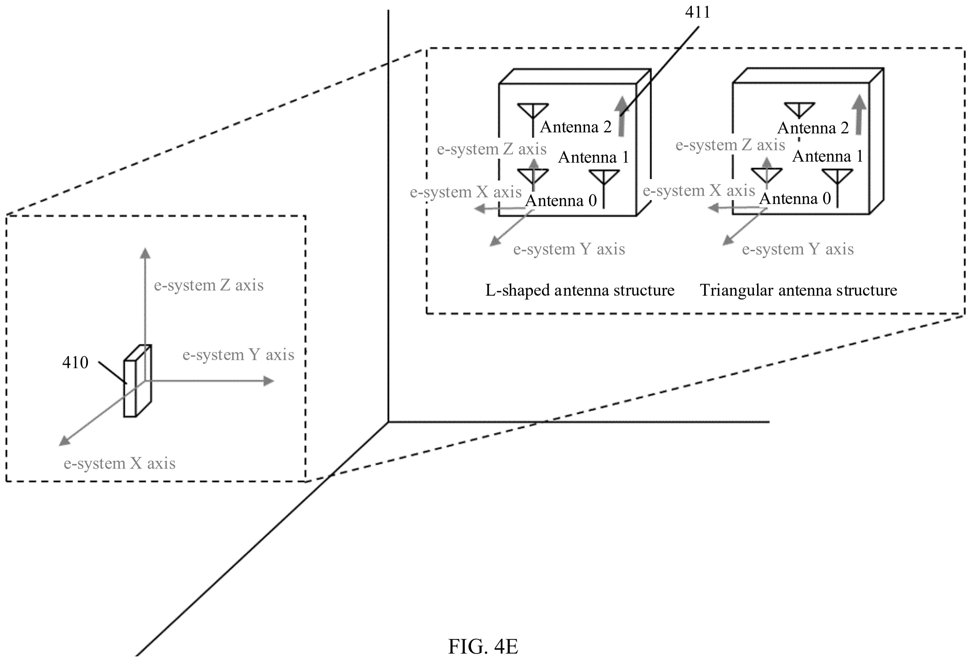

First, a coordinate system of the direction-finding base station is established. Refer to FIG. 4E. FIG. 4E is a diagram of a coordinate system of a direction-finding base station according to an embodiment of this application. For example, a direction-finding base station 410 uses a three-antenna structure. FIG. 4E shows two feasible three-antenna distributions: an L-shaped antenna structure and a triangular antenna structure. During installation of the direction-finding base station, an arrow 411 shown in FIG. 4E needs to be perpendicular to a horizontal plane and points upward for installation. For example, the direction-finding base station 410 may be installed on a wall, a partition plate, or the like, or may be integrated into another intelligent device (for example, the controlled device), for example, the top of a large screen.

After the direction-finding base station 410 is installed, the coordinate system (an e system for short) of the direction-finding base station may be established. The e system uses a center of an antenna numbered 0 (an antenna 0 in FIG. 4E) in the direction-finding base station 410 as a coordinate system center O; an X axis $X_e$ of the e system is parallel to a bottom edge of the base station and points to the left; a Y axis $Y_e$ of the e system points to a front direction of the base station; and a Z axis $Z_e$ of the e system is perpendicular to a plane $X_eOY_e$ and upward, and satisfies a right-hand rule along with the axis $X_e$ and the axis $Y_e$.

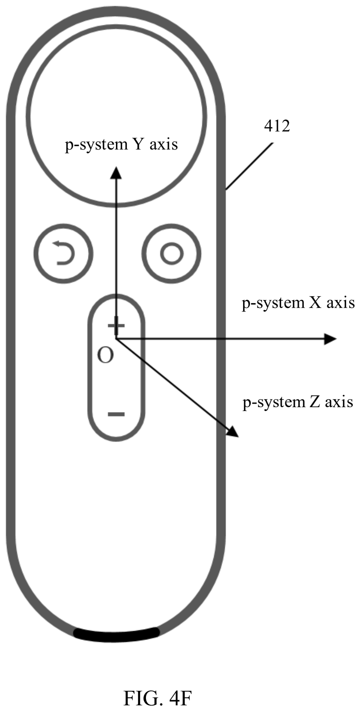

Then, a coordinate system of the remote control device is established. Refer to FIG. 4F. FIG. 4F is a diagram of a coordinate system of a remote control device according to an embodiment of this application. An origin of the coordinate system (a p system for short) of the remote control device is located at a center O of the remote control device 412; an X axis $X_p$ of the p system is rightward along a horizontal axis of the remote control device 412; a Y axis $Y_p$ of the p system is forward along a vertical axis of the remote control device 412; a Z-axis $Z_p$ of the p system is perpendicular to a plane $X_pOY_p$ of the p system and outward; and the coordinate axes of the remote control device conform to the right-hand rule.

Therefore, an attitude angle is determined based on a rotational relationship between the p system and the e system, and includes three Euler angles: an azimuth (also referred to as a heading angle) $\psi$, a pitch angle $\varphi$, and a roll angle $\theta$. For example, the pitch angle $\varphi$ is an included angle between the axis $Y_p$ in the p system and the plane $X_eOY_e$ in the e system, and is positive when the head of the remote control device is up. The azimuth $\psi$ is an included angle between projection of the axis $Y_p$ of the p system on the plane $X_eOY_e$ of the e system and the axis $Y_e$, and is positive when the head of the remote control device yaws rightward. The roll angle $\theta$ is an included angle between the axis $Z_p$ of the p system and a vertical plane containing the axis $Y_p$, and is positive when the remote control device tilts rightward.

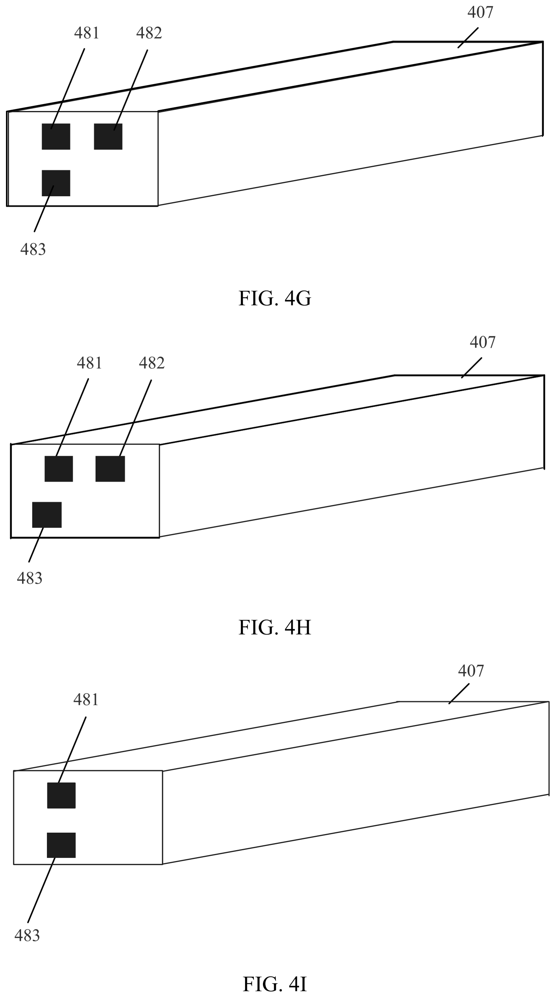

For example, when the direction-finding unit 408 is a UWB direction-finding unit, the UWB direction-finding unit includes at least two UWB antennas. Refer to FIG. 4G. FIG. 4G is a diagram of a direction-finding unit according to an embodiment of this application. The UWB direction-finding unit includes a first UWB antenna 481, a second UWB antenna 482, and a third UWB antenna 483. In this embodiment of this application, the first posture parameter is an azimuth and a pitch angle, the first UWB antenna 481 and the second UWB antenna 482 are UWB antennas in a horizontal direction, and an azimuth of the remote control device 407 may be determined based on first direction-finding signals received by the first UWB antenna 481 and the second UWB antenna 482. The first UWB antenna 481 and the third UWB antenna 483 are UWB antennas in a vertical direction, where the third UWB antenna 483 is disposed right below the first UWB antenna 481. A pitch angle of the remote control device 407 may be determined based on the first direction-finding signals received by the first UWB antenna 481 and the third UWB antenna 483. For another example, refer to FIG. 4H. FIG. 4H is a diagram of another direction-finding unit according to an embodiment of this application. A first UWB antenna 481 and a third UWB antenna 483 are UWB antennas in a vertical direction. A difference is that the third UWB antenna 483 is disposed on the lower left of the first UWB antenna 481.

For example, refer to FIG. 4I. FIG. 4I is a diagram of still another direction-finding unit according to an embodiment of this application. In this embodiment, the first posture parameter is a pitch angle, and the direction-finding unit includes a first UWB antenna 481 and a third UWB antenna 483, which are UWB antennas in a vertical direction. The third UWB antenna 483 is disposed right below the first UWB antenna 481. A pitch angle of the remote control device 407 may be determined based on first direction-finding signals received by the first UWB antenna 481 and the third UWB antenna 483.

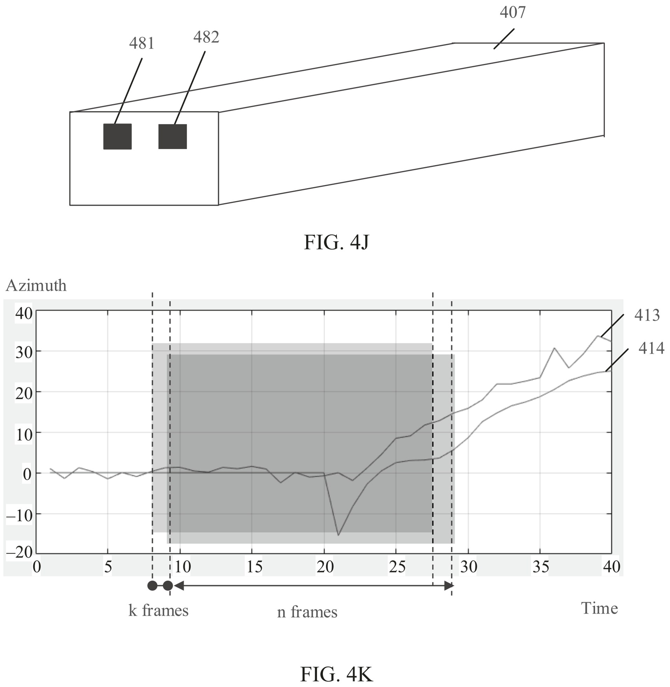

For example, refer to FIG. 4J. FIG. 4J is a diagram of yet another direction-finding unit according to an embodiment of this application. In this embodiment, the first posture parameter is an azimuth, and the direction-finding unit includes a first UWB antenna 481 and a second UWB antenna 482, which are UWB antennas in a horizontal direction. An azimuth of the remote control device 407 may be determined based on first direction-finding signals received by the first UWB antenna 481 and the second UWB antenna 482.

In a possible implementation, step 301 specifically includes the following step.

313: The device for determining a pointing direction receives the first posture parameter sent by the controlled device.

In this embodiment of this application, alternatively, the device for determining a pointing direction may directly obtain the first posture parameter of the remote control device through the controlled device, where the controlled device obtains the first posture parameter based on the first direction-finding signal. In this embodiment, the device for determining a pointing direction may be the remote control device.

For example, the controlled device obtains the first direction-finding signal received by the direction-finding unit of the remote control device, determines the first posture parameter based on the first direction-finding signal, and then sends the first posture parameter to the device for determining a pointing direction.

In a possible implementation, step 302 specifically includes the following step.

The device for determining a pointing direction obtains the second posture parameter through an inertia direction-finding unit (inertial measurement unit, IMU) of the remote control device.

Specifically, as shown in FIG. 4D, the remote control device includes an inertia direction-finding unit 409. The inertia direction-finding unit 409 may directly obtain the second posture parameter, and the device for determining a pointing direction obtains the second posture parameter through the inertia direction-finding unit 409.

In a possible implementation, a parameter representing similarity between the first posture change trend and the second posture change trend includes at least one of the following:

a first parameter representing a magnitude of correlation between the first posture parameter and the second posture parameter;

a second parameter representing a magnitude of fluctuation of a difference between the first posture parameter and the second posture parameter; and

a maximum value $V_2$ of the difference between the first posture parameter and the second posture parameter.

Specifically, when the parameter representing the similarity is the first parameter and the first parameter is greater than a second threshold, it may be considered that the similarity between the first posture change trend and the second posture change trend is greater than the first threshold. When the parameter representing the similarity is the second parameter and the second parameter is less than a third threshold, it may be considered that the similarity is greater than the first threshold. When the parameter representing the similarity is the maximum value of the difference and the maximum value of the difference is less than a fourth threshold, it may be considered that the similarity is greater than the first threshold. The second threshold, the third threshold, and the fourth threshold may be the same or may be different, and are specifically set based on an actual situation.

For example, the first parameter may be at least one of the following: a convolution, a linear correlation coefficient, a chi-square test value, or a sum R of products of the first posture parameter and the second posture parameter.

The linear correlation coefficient, also known as a Pearson (Pearson) correlation coefficient, mainly measures a degree of linear correlation between two variables. For example, the linear correlation coefficient is computed by using a product difference method. Similarly, based on dispersions between two variables and average values of the two variables, a degree of correlation between the two variables is indicated by multiplying the two dispersions.

A chi-square test is to statistically measure a degree of deviation between an actual observed value and a theoretical inferred value of a sample. The degree of deviation determines the chi-square test value. The larger the chi-square test value, the greater the degree of deviation between the actual observed value and the theoretical inferred value. On the contrary, the smaller the degree of deviation between the actual observed value and the theoretical inferred value. If the two values are the same, the chi-square test value is 0, indicating that the theoretical value is fully compliant.

For example, the second parameter may be at least one of the following: a variance $V_1$ or a standard deviation between the first posture parameter and the second posture parameter. The variance in statistics is the average of square values of a difference between each sample value and the average of all sample values. The standard deviation is an arithmetic square root of the variance.

In this embodiment of this application, it is assumed that the posture parameters of the remote control device are collected at a collection frequency p, and one frame of data may be obtained each time of collection. Therefore, 2n frames of data may be obtained, and are the first posture parameter $U$(n) and the second posture parameter $I$(n) separately, where n is greater than or equal to 2, and a specific value of n may be set based on an actual situation. The first posture parameter $U$(n) includes n absolute posture parameters (for example, an azimuth, a pitch angle, and a quaternion) of the remote control device, and the second posture parameter $I$(n) includes n relative posture parameters (for example, an azimuth, a pitch angle, and a quaternion) of the remote control device. A specific value of p may be set based on an actual situation.

For example, a manner of computing the sum R of products is: $R = \Sigma(dI(i) * dU(i))$, where $dI(i) = I(i)-I(1)$, and $i \in (2, n)$. In other words, n-1 $dI$s may be obtained by subtracting a first piece of data from other data than the first piece of data in the first posture parameter. $dU(i) = U(i)-U(1)$, where $i \in (2, n)$. Similarly, n-1 $dU$s may be obtained by subtracting a first piece of data from other data than the first piece of data in the second posture parameter.

For example, a manner of computing the variance $V_1$ is: $V_1 = var(dI(i)-dU(i))$, where $i \in (2, n)$ and *var* represents the variance.

For example, a manner of computing the maximum difference value $V_2$ is: $V_2 = max(dI(i)-dU(i))$, where $i \in (2, n)$ and *max* represents getting the maximum value.

The following describes the method for determining a pointing direction in embodiments of this application by using an example in which the device for determining a pointing direction is a remote control device, the direction-finding unit is a UWB direction-finding unit, and both the first posture parameter and the second posture parameter are azimuths. The method for determining a pointing direction includes the following steps.

S1: Initialize and power on a UWB direction-finding unit and an inertia direction-finding unit of the remote control device, where the UWB direction-finding unit starts to measure a direction from which a UWB signal comes, and the inertia direction-finding unit starts to update a second azimuth of the remote control device.

Specifically, after the UWB direction-finding unit is initialized, the remote control device computes a current first azimuth by using a first direction-finding signal received by the UWB direction-finding unit. The first direction-finding signal is sent by a controlled device. After the inertia direction-finding unit is initialized, a roll angle and a pitch angle are initialized by using a gravity direction, and an azimuth is initialized to 0°. After being initialized, the inertia direction-finding unit starts to obtain the second azimuth of the remote control device at each moment. The remote control device obtains, from the inertia direction-finding unit, the second azimuth measured by the inertia direction-finding unit. After initialization, the remote control device records the first azimuth and the second azimuth at each moment. Refer to FIG. 4K. FIG. 4K is a waveform diagram of an azimuth according to an embodiment of this application. The first azimuth corresponds to a first curve 413, and the second azimuth corresponds to a second curve 414.

The UWB direction-finding unit and the inertia direction-finding unit operate based on a collection frequency p.

S2: Start to perform determining after n frames of the first azimuth and the second azimuth are collected.

Specifically, it is assumed that the azimuths of the remote control device are collected at the collection frequency p, and one frame of the first azimuth and the second azimuth may be obtained each time of collection.

After n frames of the first azimuth and the second azimuth are collected, determining may be started. If there is no pointing-direction result upon determining for the first time, k frames of data may be further collected as shown in FIG. 4K, and n frames of data are obtained through re-combination with existing (n-k) frames of data to continue with determining. The (n-k) frames of data are data whose time is later in the original n frames of data.

S3: Determine, by using the first azimuth and the second azimuth, whether the remote control device is pointing to the controlled device.

Specifically, the collected first azimuth and second azimuth are respectively represented by I(n) and U(n). First, a difference operation is performed on the data, that is, a first piece of data is subtracted from remaining data: $dI(i) = I(i)-I(1)$, where $i \in (2, n)$; and similarly, $dU(i) = U(i)-U(1)$, where $i \in (2, n)$.

It is assumed that n is 4. Then the first azimuths are $I(1)$, $I(2)$, $I(3)$, and $I(4)$, and the second azimuths are $U(1)$, $U(2)$, $U(3)$, and $U(4)$. Their sequence numbers correspond to collection time. Collection time with a smaller sequence number is earlier. Therefore,

$$dI(2) = I(2){-}I(1)$$

$$dI(3) = I(3){-}I(1)$$

$$dI(4) = I(4){-}I(1)$$

$$dU(2) = U(2){-}U(1)$$

$$dU(3) = U(3){-}U(1)$$

$$dU(4) = U(4){-}U(1)$$

Then, a sum R of products, a variance $V_1$, and a maximum difference value $V_2$ are computed separately. $R = (dI(2)-dU(2)) + (dI(3)-dU(3)) + (dI(4)-dU(4))$. $V_1 = var(dI(2)-dU(2), dI(3)-dU(3), (dI(4)-dU(4)))$. $V_2 = max(dI(2)-dU(2), dI(3)-dU(3), (dI(4)-dU(4)))$.

S4: When all of $R$, $V_1$ and $V_2$ satisfy a condition, determine that the remote control device is pointing to the controlled device with direct facing and then enter a pointing mode; or otherwise consider that it is not pointing with direct facing.

The following describes, by using an example in which the direction-finding base station is separately disposed, a process of determining a specific controlled device when there are two devices on a line in the pointing direction of the remote control device.

Refer to FIG. 4L. FIG. 4L is a diagram of determining a device to be controlled according to an embodiment of this application. For example, controlled devices, a remote control device, and a direction-finding base station are disposed in a house. The direction-finding base station 415 is separately disposed, and the remote control device 417 is located on a connection line between a first controlled device 416 and a second controlled device 418. It is known that a current position of the remote control device 417 in a coordinate system of the house is $[x_h, y_h, z_h]$, an azimuth of the remote control device 417 is $\psi_h$, and a pitch angle of the remote control device 417 is $\varphi_h$. When a current azimuth and a target azimuth of the remote control device 417 and a current pitch angle and a target pitch angle of the remote control device 417 satisfy a specific condition at the same time, it may be determined that a controlled device that the remote control device 417 intends to control is the first controlled device 416.

Specifically, coordinates of the position of the first controlled device 416 in the coordinate system of the house are $[x_h^{obj}, y_h^{obj}, z_h^{obj}]$, and the current position of the remote control device 417 is computed based on the following formulas:

$$x' = x_h - x_h^{obj}$$

$$y' = y_h - y_h^{obj}$$

$$z' = z_h - z_h^{obj}$$

An azimuth and a pitch angle (namely, the target azimuth and the target pitch angle) of the remote control device 417 when the remote control device 417 is pointing to the first controlled device 416 are as follows:

$$\psi_h^{obj} = \begin{cases} -atan\left(\dfrac{x'}{y'}\right) & y' < 0 \\ -atan\left(\dfrac{x'}{y'}\right) + sign(x') * \pi & y' > 0 \\ sign(x') * \pi/2 & y' = 0 \end{cases}$$

$$\varphi_h^{obj} = atan\left(-z' / \sqrt{x'^2 + y'^2}\right)$$

where atan () is an inverse tangent function, and sign() is a sign function.

According to the method in this embodiment of this application, it may be determined whether the azimuth $\psi_h$ and the pitch angle $\varphi_h$ in this case are angles at which the remote control device 417 is pointing to the first controlled device 416, or angles at which the remote control device 417 is facing away from the first controlled device 416. When it is determined that the azimuth $\psi_h$ and the pitch angle $\varphi_h$ of the remote control device 417 are angles at which the remote control device 417 is pointing to the first controlled device 416, a difference between the current azimuth $\psi_h$ and the target azimuth $\psi_h^{obj}$ and a difference between the current pitch angle $\varphi_h$ and the target pitch angle $\varphi_h^{obj}$ of the remote control device 417 are computed as follows:

$$\Delta\psi_h^{obj} = \left|\psi_h^{obj} - \psi_h\right|$$

$$\Delta\varphi_h^{obj} = \left|\varphi_h^{obj} - \varphi_h\right|$$

When $\Delta\psi_h^{obj}$ and $\Delta\varphi_h^{obj}$ both satisfy a specific condition, it is determined that the remote control device 417 is pointing to the first controlled device 416, that is, the remote control device 417 intends to control the first controlled device 416 instead of the second controlled device 418. The specific condition may be that $\Delta\psi_h^{obj}$ is less than a fifth threshold and $\Delta\varphi_h^{obj}$ is less than a sixth threshold, where specific values of the fifth threshold and the sixth threshold may be set based on an actual situation. That $\Delta\psi_h^{obj}$ is less than the fifth threshold may be understood as that the current azimuth falls within an azimuth range, and that $\Delta\varphi_h^{obj}$ is less than the sixth threshold may be understood as that the current pitch angle falls within a pitch angle range.

The sequence numbers of the steps in the foregoing descriptions are merely used to distinguish between different steps, and do not limit an execution sequence of the steps.

It should be noted that, in embodiments of this application, unless otherwise stated or there is a logic conflict, terms and/or descriptions between embodiments are consistent and may be mutually referenced, and technical features in different embodiments may be combined based on an internal logical relationship thereof to form a new embodiment.

The foregoing is a detailed description of the method in embodiments of this application. The following describes apparatuses provided in embodiments of this application.

FIG. 5 is a diagram of a structure of a possible apparatus according to an embodiment of this application. The device for determining a pointing direction shown in FIG. 5 may be configured to implement functions of the foregoing embodiments of the method for determining a pointing direction, and therefore can also implement beneficial effects of the foregoing embodiments of the method for determining a pointing direction. In this embodiment of this application, the device for determining a pointing direction may be an electronic device, or may be a module (for example, a chip) used in the electronic device.

As shown in FIG. 5, the device 500 for determining a pointing direction includes an obtaining module 501 and a determining module 502. The device 500 for determining a pointing direction is configured to implement functions of the embodiment of the method for determining a pointing direction shown in FIG. 3. Alternatively, the device 500 for determining a pointing direction may include a module configured to implement any function or operation in the embodiment of the method for determining a pointing direction shown in FIG. 3, and the module may be all or partially implemented by using software, hardware, firmware, or any combination thereof.

When the device 500 for determining a pointing direction is configured to implement the functions in the method embodiment shown in FIG. 3, the obtaining module 501 is configured to obtain a first posture parameter of a remote control device. The first posture parameter indicates a first posture change trend of the remote control device relative to a controlled device in a first time period. The obtaining module 501 is further configured to obtain a second posture parameter of the remote control device. The second posture parameter indicates a second posture change trend of the remote control device in the first time period relative to a first moment. The first moment is earlier than the first time period. The determining module 502 is configured to: when the first posture change trend is the same as or similar to the second posture change trend, determine that the remote control device is pointing to the controlled device.

In this embodiment of this application, the device 500 for determining a pointing direction determines, by using the first posture parameter and the second posture parameter of the remote control device, whether the remote control device is pointing to the controlled device; and when it is determined that the first posture change trend is the same as or similar to the second posture change trend, may determine that the remote control device is pointing to the controlled device.

In a possible implementation, the device 500 for determining a pointing direction further includes a control module 503.

The control module 503 is configured to: after it is determined that the remote control device is pointing to the controlled device, control, based on a third posture parameter of the remote control device, the controlled device to perform a first operation, where the third posture parameter indicates a posture of the remote control device relative to the controlled device at a current moment.

The first operation may be any operation, for example, controlling the controlled device to display a cursor corresponding to the remote control device, controlling the controlled device to mute, controlling the controlled device to play music, controlling the controlled device to power on or power off, or controlling the controlled device to display a dragged interface.

In a possible implementation, a parameter representing similarity between the first posture change trend and the second posture change trend includes at least one of the following:

a first parameter representing a magnitude of correlation between the first posture parameter and the second posture parameter;

a second parameter representing a magnitude of fluctuation of a difference between the first posture parameter and the second posture parameter; and

a maximum value of the difference between the first posture parameter and the second posture parameter.

For example, the first parameter may be at least one of the following: a convolution, a linear correlation coefficient, a chi-square test value, or a sum R of products of the first posture parameter and the second posture parameter.

For example, the second parameter may be at least one of the following: a variance $V_1$ or a standard deviation between the first posture parameter and the second posture parameter.

In a possible implementation, the first posture parameter includes at least one of the following: a quaternion, an azimuth, or a pitch angle, and the second posture parameter includes a parameter of a same type as the first posture parameter.

In a possible implementation, in terms of obtaining the first posture parameter of the remote control device, the obtaining module 501 is specifically configured to:

obtain a first direction-finding signal received by a direction-finding unit of the remote control device in the first time period, where the direction-finding unit includes at least one of the following: a NearLink direction-finding unit, an ultra-wideband direction-finding unit, a Bluetooth direction-finding unit, a Wireless Fidelity Wi-Fi direction-finding unit, a millimeter-wave radar direction-finding unit, or an ultrasonic direction-finding unit, and the first direction-finding signal is transmitted by a direction-finding base station; and

determine the first posture parameter based on the first direction-finding signal.

In a possible implementation, in terms of obtaining the first posture parameter of the remote control device, the obtaining module 501 is specifically configured to: receive the first posture parameter sent by the controlled device.

In a possible implementation, in terms of obtaining the second posture parameter of the remote control device, the obtaining module 501 is specifically configured to: obtain the second posture parameter through an inertia direction-finding unit of the remote control device.

For descriptions of the foregoing modules, refer to the descriptions of the foregoing embodiments. Details are not described herein.

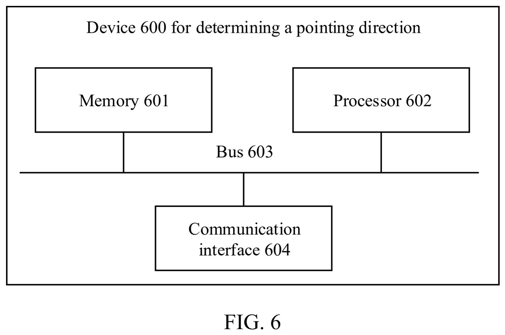

Refer to FIG. 6. FIG. 6 is a diagram of a structure of another device for determining a pointing direction according to an embodiment of this application. This application further provides a device for determining a pointing direction. The device 600 for determining a pointing direction includes a memory 601, a processor 602, a communication interface 604, and a bus 603. The memory 601, the processor 602, and the communication interface 604 are communicatively connected to each other through the bus 603.

Optionally, the device 600 for determining a pointing direction further includes a display (not shown), and the display is communicatively connected to the memory 601, the processor 602, and the communication interface 604 through the bus 603. The display is configured to output an image. Optionally, the device for determining a pointing direction further includes an output module (not shown). The output module is communicatively connected to the memory 601, the processor 602, and the communication interface 604 through the bus 603. The output module is configured for audio output. The output module may be a loudspeaker. For example, after determining that a remote control device is pointing to a controlled device, the device 600 for determining a pointing direction may perform audio output through the output module.

The memory 601 may be a read-only memory (read-only memory, ROM), a static storage device, a dynamic storage device, or a random access memory (random access memory, RAM). The memory 601 may store a program. When the program stored in the memory 601 is executed by the processor 602, the processor 602 and the communication interface 604 are configured to perform steps of the method for determining a pointing direction in any embodiment of this application.

The processor 602 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits; and is configured to execute a related program, to implement functions that need to be performed by units in the device for determining a pointing direction shown in FIG. 5 in embodiments of this application, or to perform the method for determining a pointing direction in any embodiment of this application.

The processor 602 may alternatively be an integrated circuit chip and has a signal processing capability. In an implementation process, the steps of the method for determining a pointing direction in any embodiment of this application may be completed by using a hardware integrated logic circuit in the processor 602, or by using instructions in a form of software. The processor 602 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor 602 may implement or perform the methods, steps, and logical block diagrams that are disclosed in embodiments of this application. The general-purpose processor may be a microprocessor, or the processor may be any conventional processor or the like. The steps of the method for determining a pointing direction in any embodiment of this application may be directly executed and completed by a hardware processor, or may be executed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 601. The processor 602 reads information in the memory 601, and completes, in combination with hardware of the processor 602, functions that need to be performed by units included in the device for determining a pointing direction shown in FIG. 5 in embodiments of this application, or performs the method for determining a pointing direction in any embodiment of this application.

The communication interface 604 uses a transceiver apparatus, for example, but not limited to, a transceiver, to implement communication between the device 600 for determining a pointing direction and another device or communication network. For example, a first posture parameter, a second posture parameter, or the like may be obtained through the communication interface 604.

The bus 603 may include a path for transmitting information between components (for example, the memory 601, the processor 602, and the communication interface 604) of the device 600 for determining a pointing direction.

It should be noted that, although only the memory 601, the processor 602, the bus 603, and the communication interface 604 are shown in the device 600 for determining a pointing direction in FIG. 6, in a specific implementation process, a person skilled in the art should understand that the device 600 for determining a pointing direction further includes another component required for implementing normal running. In addition, based on a specific requirement, a person skilled in the art should understand that the device 600 for determining a pointing direction may further include a hardware component for implementing another additional function. In addition, a person skilled in the art should understand that the device 600 for determining a pointing direction may alternatively include only a component required for implementing embodiments of this application, and do not necessarily include all the components shown in FIG. 6.

In the several embodiments provided in this application, it should be understood that the disclosed apparatus and method may be implemented in other manners. For example, the described apparatus embodiments are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented electronically, mechanically, or in other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When software is used for implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, such as a digital versatile disc (digital versatile disc, DVD), or a semiconductor medium, such as a solid-state disk (solid-state disk, SSD).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for determining a pointing direction, comprising:

    obtaining a first posture parameter of a remote control device, wherein the first posture parameter indicates a first posture change trend of the remote control device relative to a controlled device in a first time period;
    obtaining a second posture parameter of the remote control device, wherein the second posture parameter indicates a second posture change trend of the remote control device in the first time period relative to a first moment, and the first moment is earlier than the first time period; and
    when the first posture change trend is the same as or similar to the second posture change trend, determining that the remote control device is pointing to the controlled device.

2. The method according to claim 1, wherein after it is determined that the remote control device is pointing to the controlled device, the method further comprises:
    controlling, based on a third posture parameter of the remote control device, the controlled device to perform a first operation, wherein the third posture parameter indicates a posture of the remote control device relative to the controlled device at a current moment.

3. The method according to claim 1 or 2, wherein a parameter representing similarity between the first posture change trend and the second posture change trend comprises at least one of the following:

a first parameter representing a magnitude of correlation between the first posture parameter and the second posture parameter;
a second parameter representing a magnitude of fluctuation of a difference between the first posture parameter and the second posture parameter; and
a maximum value of the difference between the first posture parameter and the second posture parameter.

4. The method according to any one of claims 1 to 3, wherein the first posture parameter comprises at least one of the following: a quaternion, an azimuth, or a pitch angle, and the second posture parameter comprises a parameter of a same type as the first posture parameter.

5. The method according to any one of claims 1 to 4, wherein obtaining the first posture parameter of the remote control device comprises:

obtaining a first direction-finding signal received by a direction-finding unit of the remote control device in the first time period, wherein the direction-finding unit comprises at least one of the following: a NearLink direction-finding unit, an ultra-wideband direction-finding unit, a Bluetooth direction-finding unit, a Wireless Fidelity Wi-Fi direction-finding unit, a millimeter-wave radar direction-finding unit, or an ultrasonic direction-finding unit, and the first direction-finding signal is transmitted by a direction-finding base station; and
determining the first posture parameter based on the first direction-finding signal.

6. The method according to any one of claims 1 to 4, wherein obtaining the first posture parameter of the remote control device comprises:
receiving the first posture parameter sent by the controlled device.

7. The method according to any one of claims 1 to 6, wherein obtaining the second posture parameter of the remote control device comprises:
obtaining the second posture parameter through an inertia direction-finding unit of the remote control device.

8. A device for determining a pointing direction, wherein the device comprises:

an obtaining module, configured to obtain a first posture parameter of a remote control device, wherein the first posture parameter indicates a first posture change trend of the remote control device relative to a controlled device in a first time period,
the obtaining module is further configured to obtain a second posture parameter of the remote control device, the second posture parameter indicates a second posture change trend of the remote control device in the first time period relative to a first moment, and the first moment is earlier than the first time period; and
a determining module, configured to: when the first posture change trend is the same as or similar to the second posture change trend, determine that the remote control device is pointing to the controlled device.

9. The device according to claim 8, wherein the device further comprises:
a control module, configured to: after it is determined that the remote control device is pointing to the controlled device, control, based on a third posture parameter of the remote control device, the controlled device to perform a first operation, wherein the third posture parameter indicates a posture of the remote control device relative to the controlled device at a current moment.

10. The device according to claim 8 or 9, wherein a parameter representing similarity between the first posture change trend and the second posture change trend comprises at least one of the following:

a first parameter representing a magnitude of correlation between the first posture parameter and the second posture parameter;
a second parameter representing a magnitude of fluctuation of a difference between the first posture parameter and the second posture parameter; and
a maximum value of the difference between the first posture parameter and the second posture parameter.

11. The device according to any one of claims 8 to 10, wherein the first posture parameter comprises at least one of the following: a quaternion, an azimuth, or a pitch angle, and the second posture parameter comprises a parameter of a same type as the first posture parameter.

12. The device according to any one of claims 8 to 11, wherein in terms of obtaining the first posture parameter of the remote control device, the obtaining module is specifically configured to:

obtain a first direction-finding signal received by a direction-finding unit of the remote control device in the first time period, wherein the direction-finding unit comprises at least one of the following: a NearLink direction-finding unit, an ultra-wideband direction-finding unit, a Bluetooth direction-finding unit, a Wireless Fidelity Wi-Fi direction-finding unit, a millimeter-wave radar direction-finding unit, or an ultrasonic direction-finding unit, and the first direction-finding signal is transmitted by the direction-finding base station; and
determine the first posture parameter based on the first direction-finding signal.

13. The device according to any one of claims 8 to 11, wherein in terms of obtaining the first posture parameter of the remote control device, the obtaining module is specifically configured to:
receive the first posture parameter sent by the controlled device.

14. The device according to any one of claims 8 to 13, wherein in terms of obtaining the second posture parameter of the remote control device, the obtaining module is specifically configured to:
obtain the second posture parameter through an inertia direction-finding unit of the remote control device.

15. A device for determining a pointing direction, comprising a processor and a memory, wherein the processor is connected to the memory, the memory is configured to store program code, and the processor is configured to invoke the program code to perform the method for determining a pointing direction according to any one of claims 1 to 7.

16. A computer-readable storage medium, wherein the computer-readable storage medium stores a computer program, and the computer program is executed by a processor to implement the method for determining a pointing direction according to any one of claims 1 to 7.

1/11

FIG. 1A

FIG. 1B

FIG. 2

300

301

A device for determining a pointing direction obtains a first posture parameter of a remote control device

302

The device for determining a pointing direction obtains a second posture parameter of the remote control device

303

When a first posture change trend is the same as or similar to a second posture change trend, the device for determining a pointing direction determines that the remote control device is pointing to a controlled device

304

The device for determining a pointing direction controls, based on a third posture parameter of the remote control device, the controlled device to perform a first operation

FIG. 3

401

402

Posture parameter

Time

FIG. 4A

FIG. 4B

FIG. 4C

FIG. 4D

L-shaped antenna structure    Triangular antenna structure

FIG. 4E

p-system Y axis

412

p-system X axis

p-system Z axis

FIG. 4F

407

481 482

483

FIG. 4G

407

481 482

483

FIG. 4H

407

481

483

FIG. 4I

FIG. 4J

FIG. 4K

416

415

417

418

FIG. 4L

<u>500</u>

Obtaining module — 501

Determining module — 502

Control module — 503

FIG. 5

Device 600 for determining a pointing direction

Memory 601

Processor 602

Bus 603

Communication
interface 604

FIG. 6

## INTERNATIONAL SEARCH REPORT

| International application No. |
| --- |
| **PCT/CN2024/111660** |

| A. | CLASSIFICATION OF SUBJECT MATTER |
| --- | --- |
| | H04W 4/02(2018.01)i |

According to International Patent Classification (IPC) or to both national classification and IPC

| B. | FIELDS SEARCHED |
| --- | --- |

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, IEEE: 姿态变化趋势 参数 指向 遥控 时间 posture change trend parameter point remote control time

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 103218059 A (SVA TECHNOLOGIES CO., LTD.) 24 July 2013 (2013-07-24) description, paragraphs [0041]-[0048] | 1-16 |
| A | CN 102981641 A (LENOVO (BEIJING) CO., LTD.) 20 March 2013 (2013-03-20) entire document | 1-16 |
| A | CN 103616989 A (BEIJING STAR-NET RUIJIE NETWORKS CO., LTD.) 05 March 2014 (2014-03-05) entire document | 1-16 |
| A | CN 107203178 A (BEIJING XIAOMI MOBILE SOFTWARE CO., LTD.) 26 September 2017 (2017-09-26) entire document | 1-16 |
| A | EP 1818770 A1 (RESEARCII IN MOTION LIMITED) 15 August 2007 (2007-08-15) entire document | 1-16 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 November 2024** | **19 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111660**

| Patent document cited in search report | | | Publication date (day/month/year) | Patent family member(s) | | | Publication date (day/month/year) |
|---|---|---|---|---|---|---|---|
| CN | 103218059 | A | 24 July 2013 | None | | | |
| CN | 102981641 | A | 20 March 2013 | None | | | |
| CN | 103616989 | A | 05 March 2014 | None | | | |
| CN | 107203178 | A | 26 September 2017 | None | | | |
| EP | 1818770 | A1 | 15 August 2007 | US | 2007188470 | A1 | 16 August 2007 |
| | | | | US | 8654078 | B2 | 18 February 2014 |
| | | | | US | 2007188463 | A1 | 16 August 2007 |
| | | | | EP | 1818758 | A1 | 15 August 2007 |
| | | | | US | 2007209024 | A1 | 06 September 2007 |
| | | | | US | 7552142 | B2 | 23 June 2009 |
| | | | | US | 2007188468 | A1 | 16 August 2007 |
| | | | | EP | 1818772 | A1 | 15 August 2007 |
| | | | | US | 2007188467 | A1 | 16 August 2007 |
| | | | | US | 2007192028 | A1 | 16 August 2007 |
| | | | | US | 7770118 | B2 | 03 August 2010 |
| | | | | US | 2007188464 | A1 | 16 August 2007 |
| | | | | EP | 1818778 | A1 | 15 August 2007 |
| | | | | EP | 1818757 | A1 | 15 August 2007 |
| | | | | US | 2007188469 | A1 | 16 August 2007 |
| | | | | EP | 1818759 | A1 | 15 August 2007 |
| | | | | US | 2010259369 | A1 | 14 October 2010 |
| | | | | US | 8537108 | B2 | 17 September 2013 |
| | | | | US | 2007188462 | A1 | 16 August 2007 |
| | | | | US | 8878784 | B2 | 04 November 2014 |
| | | | | EP | 1818771 | A1 | 15 August 2007 |
| | | | | EP | 1818771 | A8 | 21 November 2007 |
| | | | | EP | 1818760 | A1 | 15 August 2007 |

Form PCT/ISA/210 (patent family annex) (July 2022)

**REFERENCES CITED IN THE DESCRIPTION**

**Patent documents cited in the description**

- CN 202311163707X